# FASCICULE DE BREVET EUROPEEN

(11) **EP 2 367 344 B1**
(45) Date de publication et mention de la délivrance du brevet: **04.06.2014**
(21) Numéro de dépôt: 11158154.2
(22) Date de dépôt: 14.03.2011
(51) Int. Cl.: H04M 15/00, H04W 4/24, H04L 12/14

(54) **Gestion d'un changement de tarif lors d'une communication**
Verwaltung von Tarifänderung während einer Kommunikation
Managing tariff change during a commuincation

(30) Priorité: 16.03.2010 FR 1051852
(43) Date de publication de la demande: 21.09.2011
(73) Titulaire: Alcatel Lucent, 75007 Paris (FR)
(72) Inventeur: Levy, Thomas, 91620 Nozay (FR); Brouard, Kim, 78141 Velizy (FR)
(74) Mandataire: Mouney, Jérôme

(56) Documents cités:
- EP-A1- 1 732 302
- WO-A1-2009/076675
- US-A1- 2010 010 922
- "Digital cellular telecommunications system (Phase 2+); Universal Mobile Telecommunications System (UMTS); LTE; Telecommunication management; Charging management; Diameter charging applications (3GPP TS 32.299 version 8.9.0 Release 8)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V8.9.0, 1 janvier 2010 (2010-01-01), XP014045780,

## Description

La présente invention concerne la gestion de changement de tarif d'une communication en cours établie par un terminal d'utilisateur, et plus particulièrement la gestion des conditions relatives au changement de tarif de la communication.

Le document 3GPP TS32.299 définit une interface Ro pour la tarification en temps réel entre un module CTF ("Charging Trigger Function" en anglais) et un module OCS ("Online Charging System" en anglais).

Des fonctions de déclenchement de "ré-autorisation" définissent des évènements que le module CTF doit surveiller pendant la délivrance d'un service. Lorsqu'un tel évènement a lieu, par exemple un changement de localisation ou un changement de qualité de service, le module CTF doit déclencher une ré-autorisation au module OCS pour adapter la tarification du service.

Les évènements à surveiller par l'élément de réseau peuvent être configurés statiquement par le module CTF ou le module OCS peut demander au module CTF de surveiller de tels évènements en utilisant un message de type Diameter qui contient un champ renseigné par une paire attribut-valeur AVP ("Attribute Value Pair" en anglais) correspondant à des informations sur un évènement déclencheur du changement de tarif.

Selon une solution, un opérateur qui configure la tarification de services délivrés par le réseau, configure statiquement les évènements à surveiller par le module CTF dans le module OCS pour chacun des services à facturer.

Cependant, si le module CTF surveille des évènements qui n'ont pas d'influence sur la tarification, le module CTF utilise inutilement des ressources et requiert une ré-autorisation inutile du module OCS. Si le module CTF ne surveille pas des évènements qui ont une influence sur la tarification, le module OCS ne sera pas averti de ces évènements pendant la délivrance du service et le tarif du service ne sera pas déterminé correctement par le module OCS.

Un objectif de l'invention est de surveiller seulement les évènements qui influencent la tarification de services délivrés par le réseau.

Pour atteindre cet objectif, un procédé pour la gestion d'un changement de tarif d'une communication établie par un terminal d'utilisateur dans un réseau de télécommunications, comprend les étapes suivantes dans un serveur inclus dans le réseau de télécommunications :
après la réception d'une requête issue d'un élément de réseau apte à générer des évènements de tarification en surveillant l'utilisation des ressources du réseau par la communication, ladite requête comprenant un identificateur d'un service relatif à la communication et en outre un nombre d'unités de service requises, déterminer un tarif de la communication en fonction du service relatif à la communication et d'un ensemble de valeurs de paramètres relatifs à la communication,
identifier dynamiquement, parmi les paramètres ayant servi à déterminer le tarif, un ensemble de paramètres qui sont associés à des évènements susceptibles de modifier la tarification de la communication pendant un délai donné déduit du nombre d'unités de service requises contenu dans la requête à partir de l'instant auquel la requête issue de l'élément de réseau est reçue par le serveur, et
transmettre une réponse, comprenant l'ensemble des paramètres associés à des évènements susceptibles de modifier la tarification de la communication, à l'élément de réseau afin que ce dernier surveille seulement des évènements qui sont respectivement associés aux paramètres et dont la survenance modifie la tarification de la communication.

Pour une utilisation donnée d'un service, l'élément de réseau doit surveiller idéalement seulement une liste d'évènements qui peuvent influencer la tarification de la communication. Ainsi, il est possible que seul un évènement tel qu'un changement de qualité de service puisse influencer le tarif et il serait inutile de surveiller un changement de qualité de service pendant toute la journée si la qualité de service n'a pas d'influence sur le tarif pendant une période dite "période creuse".

Avantageusement, l'invention offre une fonctionnalité supplémentaire au réseau de télécommunication pour que le serveur détermine de manière efficace et précise les possibilités de déclenchement de "ré-autorisation" d'utilisation du service, ce qui économise des ressources en surveillant seulement certains évènements pendant la délivrance du service. De plus, l'activité entre l'élément de réseau et le serveur est réduite, puisque le serveur n'est pas sollicité par l'élément de réseau lorsqu'un évènement n'influence pas le tarif.

Les paramètres qui sont associés à des évènements susceptibles de modifier la tarification de la communication sont identifiés dynamiquement en fonction du service et des conditions en temps réel de l'utilisation du service.

Selon d'autres caractéristiques de l'invention, les paramètres de l'ensemble peuvent être classés sous forme de hiérarchie, et peuvent appartenir à un arbre de décision.

L'invention concerne également un serveur pour la gestion d'un changement de tarif d'une communication établie par un terminal d'utilisateur dans un réseau de télécommunications, comprenant :
des moyens pour déterminer, après la réception d'une requête issue d'un élément de réseau apte à générer des évènements de tarification en surveillant l'utilisation des ressources du réseau par la communication, ladite requête comprenant un identificateur d'un service relatif à la communication, un tarif de la communication en fonction du service relatif à la communication et d'un ensemble de valeurs de paramètres relatifs à la communication,
des moyens pour identifier, parmi les paramètres ayant servi à déterminer le tarif, un ensemble de paramètres qui sont associés à des évènements susceptibles de modifier la tarification de la communication, et
des moyens pour transmettre une réponse, comprenant l'ensemble des paramètres associés à des évènements susceptibles de modifier la tarification de la communication, à l'élément de réseau afin que ce dernier surveille seulement des évènements qui sont respectivement associés aux paramètres et dont la survenance modifie la tarification de la communication.

L'invention se rapporte encore à un programme d'ordinateur apte à être mis en oeuvre dans un serveur, ledit programme comprenant des instructions qui, lorsque le programme est exécuté dans ledit serveur, réalisent les étapes selon le procédé de l'invention.

La présente invention et les avantages qu'elle procure seront mieux compris au vu de la description ci-après faite en référence aux figures annexées, dans lesquelles :
- la figure 1 est un bloc-diagramme schématique d'un système de communication selon une réalisation de l'invention pour gérer des changements de tarif d'une communication ;
- la figure 2 est un arbre de décision pour déterminer le tarif d'une communication selon une réalisation de l'invention ; et
- la figure 3 est un algorithme d'un procédé pour gérer des changements de tarif d'une communication selon une réalisation de l'invention.

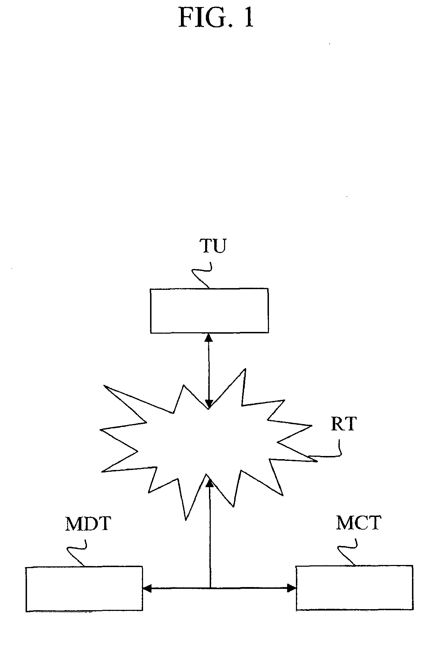

En référence à la figure 1, un système de communication selon l'invention comprend un réseau de télécommunications RT, un terminal d'utilisateur TU, un module de déclenchement de taxation MDT et un module de contrôle de taxation MCT.

Dans la suite de la description, le terme module peut désigner un dispositif, un logiciel ou une combinaison de matériel informatique et de logiciel, configuré pour exécuter au moins une tâche particulière.

Le réseau de télécommunications RT peut être un réseau filaire ou sans fil, ou une combinaison de réseaux filaires et de réseaux sans fil.

Le terminal d'utilisateur TU est apte à établir une communication dans le réseau de télécommunications RT, par exemple avec un autre terminal d'utilisateur. A titre d'exemples, un terminal d'utilisateur TU est un téléphone fixe ou mobile, un dispositif ou objet électronique de télécommunications qui est personnel à l'utilisateur et qui peut être un assistant numérique personnel communicant PDA ("Personnal Digital Assistant" en anglais), ou un téléphone intelligent (SmartPhone), pouvant être relié à une borne d'accès d'un réseau public sans fil de faible portée du type WLAN ("Wireless Local Area Network" en anlais) ou conforme à l'une des normes 802.1x, ou de moyenne portée selon le protocole WIMAX ("World wide Interoperability Microwave Access" en anglais).

Le module de déclenchement de taxation MDT et le module de contrôle de taxation MCT communiquent entre eux à travers le réseau de télécommunications RT du type internet. Dans une variante, le module de déclenchement de taxation MDT et le module de contrôle de taxation MCT communiquent entre eux par un réseau local ou par des lignes spécialisées à travers le réseau RT.

Le module de déclenchement de taxation MDT et le module de contrôle de taxation MCT peuvent être respectivement implémentés dans des serveurs distincts, tels que des serveurs d'application. Dans une variante, le module de déclenchement de taxation MDT et le module de contrôle de taxation MCT sont combinés en ou intégrés dans un unique serveur.

Le module de contrôle de taxation MCT a pour fonctionnalité de déterminer des informations sur le tarif actuel d'une communication établie par le terminal d'utilisateur, notamment en fonction d'un service demandé par l'utilisateur, et de transmettre un message au module de déclenchement de taxation MDT, le message contenant des évènements à surveiller par le module de déclenchement de taxation MDT.

Le module de déclenchement de taxation MDT a pour fonctionnalité de surveiller des évènements qui ont une influence sur la tarification d'une communication, les évènements à surveiller étant indiqués par le module de contrôle de taxation MCT.

Selon une réalisation de l'invention à laquelle il sera fait référence tout au long de la suite de la description, le réseau de télécommunication RT est un réseau de paquets connecté à un réseau IMS ("IP Multimédia Subsystem" en anglais).

Il est considéré que le terminal d'utilisateur est apte à communiquer à travers le réseau de télécommunications RT connecté au réseau IMS, par exemple avec un autre terminal, selon une communication conforme au protocole SIP ("Session Internet Protocol" e anglais). Par exemple, la communication correspond à un échange de flux multimédias relatifs à des contenus audio et/ou des contenus vidéo, ou encore à des messages instantanés. La communication établie par le terminal d'utilisateur peut être aussi une communication avec un serveur de service, tel qu'un serveur web ou un serveur de contenu multimédia.

Le profil de l'utilisateur, contenant les services auxquels ce dernier a souscrit, est mémorisé dans un serveur HSS ("Home Subscriber Server" en anglais) gérant une base de données contenant notamment les identités des utilisateurs, des informations d'enregistrement, des paramètres d'accès et des informations permettant l'invocation de services souscrits par les utilisateurs. Selon une implémentation, le serveur HSS interagit avec d'autres entités du réseau IMS au moyen du protocole Diameter.

Le contrôle d'une communication initiée par le terminal est pris en charge dans le réseau IMS notamment par trois entités de contrôle CSCF ("Call State Control Function" en anglais) : l'entité P-CSCF ("Proxy CSCF" en anglais), I-CSCF ("Interrogating CSCF" en anglais) et S-CSCF ("Serving-CSCF" en anglais).

L'entité P-CSCF est le premier point de contact dans le réseau IMS et son adresse est découverte par le terminal d'utilisateur lors de l'activation d'un contexte PDP ("Packet Data Protocol" en anglais) pour l'échange de messages SIP.

L'entité I-CSCF est en communication avec l'entité P-CSCF et avec le serveur HSS pour assigner l'entité S-CSCF à l'utilisateur en fonction du profil de l'utilisateur mémorisé dans le serveur HSS.

L'entité S-CSCF prend en charge le contrôle de la session de la communication établie par le terminal d'utilisateur et l'invocation de services souscrits par l'utilisateur.

Le module de déclenchement de taxation MDT surveille le contexte de la communication établie par le terminal d'usager, en vérifiant si la valeur d'au moins une donnée parmi un ensemble prédéfini de données de contexte a changé. Ces données de contexte sont fournies par le réseau de télécommunications et sont relatives à la communication. Ces données de contexte correspondent par exemple au débit de la communication, ou à la qualité de service de la communication, ou encore au type de média utilisé dans la communication.

Lorsque le module de déclenchement de taxation MDT détecte l'expiration d'un délai donné, ou un changement de valeur de données de contexte, le module MDT interroge le module de contrôle de taxation MCT pour que ce dernier fournisse au module MDT des informations sur un changement de tarif de la communication. Le module de déclenchement de taxation MDT et le module de contrôle de taxation MCT communiquent entre eux par exemple au moyen du protocole Diameter Ro.

Le module de contrôle de taxation MCT peut être inclus dans un système de tarification en ligne OCS ("Online Charging System" en anglais) qui peut être un serveur situé à différents emplacements dans le réseau IMS.

) Le module de déclenchement de taxation MDT peut être inclus dans un élément de réseau, tel qu'un serveur d'application ou une passerelle GGSN ("Gateway GPRS Support Node" en anglais). Par exemple, le module de déclenchement de taxation MDT implémente une fonction CTF ("Charging Trigger Function" en anglais), qui est un point central pour collecter des informations pertinentes relatives à des évènements de tarification dans le réseau.

L'élément de réseau, dans lequel est inclus le module de déclenchement de taxation MDT, apte à générer des évènements de tarification en surveillant l'utilisation des ressources du réseau par la communication.

Le module de contrôle de taxation MCT détermine le tarif actuel d'une communication en cours en fonction d'un ensemble de paramètres et de valeurs de ces paramètres associé au tarif. Les paramètres sont relatifs à la communication et peuvent correspondre en partie à des données de contexte fournies par le réseau ou bien être basées sur des ensembles de données de contexte.

Le module de contrôle de taxation MCT détermine en outre les évènements, c'est-à-dire les paramètres relatifs à la communication, qui influencent la tarification de la communication. Plus particulièrement, le module MCT peut déterminer le tarif actuel d'une communication en cours, à un instant t, et déterminer les paramètres susceptibles de modifier la tarification de la communication entre l'instant t et un instant t+T, T étant un délai donné.

Selon un exemple, un paramètre est le type de média utilisé dans la communication et peut avoir pour valeur "vidéo" ou "audio". La valeur de ce paramètre peut être égale à la valeur d'une donnée de contexte correspondant au type de média utilisé dans la communication. Selon un autre exemple, un paramètre est le type de résolution d'une vidéo utilisé dans la communication et peut avoir pour valeur "haute" ou "basse". La valeur de ce paramètre peut être déduite des valeurs de données de contexte correspondant au débit de la communication et à la qualité de service de la communication.

A titre d'exemple, le module de contrôle de taxation MCT détermine le tarif actuel d'une communication en cours à partir de paramètres qui sont classés sous forme de hiérarchie. Par exemple, les paramètres peuvent être représentés sous forme d'un graphe, tel qu'un arbre de décision, comprenant des noeuds centraux correspondant respectivement à des paramètres, des noeuds feuilles correspondant respectivement à des tarifs et un noeud racine correspondant à un paramètre initial.

Chaque noeud central est relié à au moins un autre noeud central et/ou à un noeud racine. Chaque noeud central correspond à une condition associée à un paramètre de la communication établie par le terminal d'utilisateur, un paramètre étant par exemple "type de média" et la condition étant "Quel est le type de média utilisé?". Chaque paramètre peut être renseigné par une ou plusieurs valeurs qui correspondent à des réponses à la condition associée au paramètre.

A partir d'informations sur la communication fournies par le réseau IMS, notamment via l'entité S-CSCF, le module de contrôle de taxation MCT analyse la valeur d'un premier paramètre correspondant au noeud racine. En fonction de la valeur, le module MCT analyse la valeur d'un autre paramètre correspondant à un noeud central directement relié au noeud racine ou identifie un tarif correspondant à un noeud feuille directement relié au noeud racine. Le module de contrôle de taxation MCT peut ainsi parcourir le graphe en analysant des paramètres correspondant à des noeuds centraux jusqu'à aboutir à un noeud feuille et identifier le tarif correspondant à ce noeud feuille.

Selon un autre exemple, des tarifs et les paramètres sont classés dans une table de correspondance. Chaque tarif est associé à un ensemble de paramètres ayant des valeurs données. Deux tarifs peuvent être associés à un même ensemble de paramètres avec au moins l'un des paramètres qui a deux valeurs distinctes et respectivement associées aux deux tarifs. Par exemple, deux tarifs sont associés à un même ensemble de paramètres dont seulement un paramètre "type de média" a deux valeurs distinctes "vidéo" et "audio" respectivement associées aux deux tarifs.

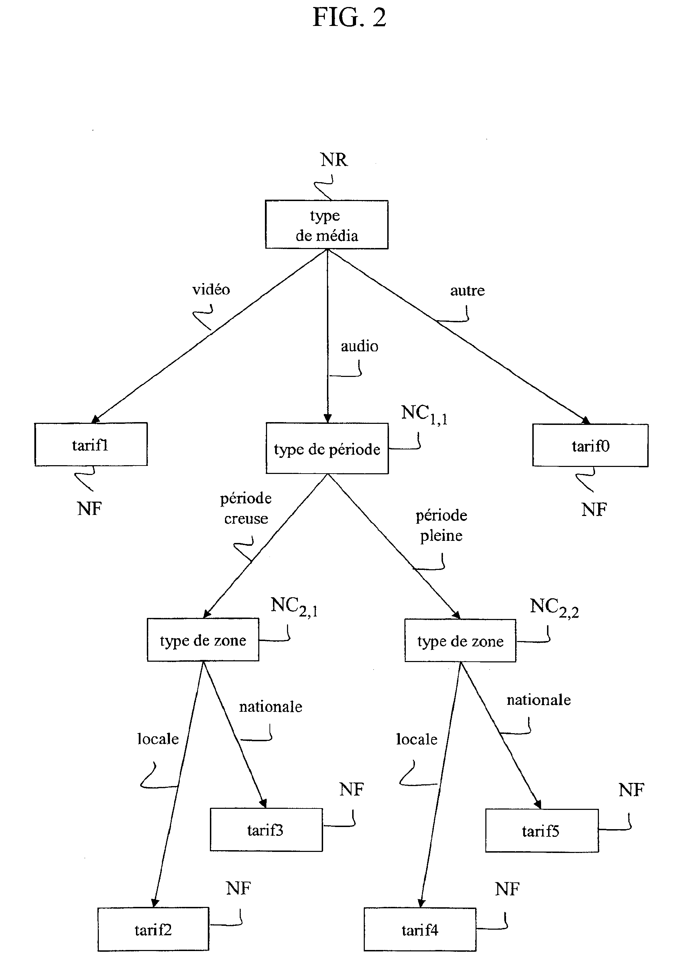

A titre d'exemple est représenté à la figure 2 un graphe correspondant à un arbre de décision pour déterminer un tarif relatif à une communication, et par conséquent un tarif relatif à un service lié à la communication. Un arbre de décision spécifique peut être utilisé pour chaque type de réseau d'accès. Selon la valeur d'un paramètre correspondant au noeud racine NR, le module MCT analyse la valeur d'un paramètre correspondant à un noeud central NC_{1,n1} de premier niveau, avec 1 ≤ n1 ≤ N1 et N1 étant le nombre de noeuds centraux de premier niveau, et selon la valeur du paramètre correspondant au noeud central NC_{1,n1}, le module MCT analyse éventuellement la valeur d'un paramètre correspondant à un noeud central NC_{2,n2} de deuxième niveau, avec 1 ≤ n1 ≤ N1 et N1 étant le nombre de noeuds centraux de deuxième niveau, et ainsi de suite jusqu'à aboutir à un noeud feuille NF et identifier le tarif correspondant.

Selon un exemple d'illustration d'un arbre de décision, un noeud racine NR est associé au paramètre "type de média". Si la communication est de type "vidéo", c'est-à-dire si le paramètre "type de média" est renseigné par la valeur "vidéo", le module MCT identifie un tarif "tarif1" associé au noeud feuille NF1. Si la communication est de type "audio", le module MCT analyse la valeur d'un paramètre "type de période" correspondant au noeud central NC_{1,1}. Si la communication n'est ni de type audio, ni de type vidéo, la communication est considérée être de type "autre" et le module MCT identifie un tarif "tarif0" associé au noeud feuille NF. Dans cet exemple, le tarif "tarif0" peut correspondre à un tarif unique appliqué à tout type de communication autre qu'un appel audio ou vidéo vers un autre utilisateur, par exemple avec un serveur de service.

Selon cet exemple d'illustration, une communication de type audio peut se produire pendant un première période de temps "période creuse", ou une deuxième période de temps "période pleine". Quelle que soit la valeur de la période renseignant le paramètre "type de période", le module MCT analyse la valeur du paramètre "type de zone" correspondant au noeud central NC_{2,1} ou NC_{2,2}. Si la communication est une radiocommunication audio, la zone peut être déterminée en fonction de la localisation de l'utilisateur. Par exemple, seulement deux zones "locale" et "nationale" sont considérées, correspondant à une localisation de l'utilisateur respectivement à l'intérieur et à l'extérieur d'une zone donnée, telle qu'une ou plusieurs zones de couverture à proximité du domicile de l'utilisateur.

Ainsi, le module de contrôle de taxation MCT identifie :
- un tarif "tarif2" pour une communication audio locale en période creuse,
- un tarif "tarif3" pour une communication audio locale en période pleine,
- un tarif "tarif4" pour une communication audio nationale en période creuse,
- un tarif "tarif5" pour une communication audio nationale en période pleine.

Le module de contrôle de taxation MCT transmet au module de déclenchement de taxation MDT le tarif actuel de la communication qui est associé à l'ensemble des valeurs déterminées de paramètres, ainsi que les paramètres susceptibles de modifier la tarification de la communication.

En outre, le module MCT peut mémoriser les paramètres de la communication en cours, ainsi que les valeurs associées, utilisés pour déterminer le tarif actuel à chaque fois qu'il est sollicité par le module de déclenchement de taxation MDT,

L'arbre de décision correspond à un classement sous forme de hiérarchie des paramètres et peut être programmé sous forme d'instructions du type "if" et "then". L'arbre de décision est un exemple parmi d'autres implémentations possibles pour déterminer le tarif et la raison d'un changement de tarif.

Selon un autre exemple, les tarifs et les paramètres peuvent être classés dans une table de correspondance, comme décrit précédemment. Chaque tarif est associé à un ensemble de paramètres ayant des valeurs données, c'est-à-dire chaque tarif est associé à un ensemble unique de valeurs de paramètres. Un tarif donné est différent d'un autre tarif du fait qu'au moins une valeur de paramètre associée au tarif donné n'est pas associée à l'autre tarif.

Le module MCT peut déterminer le tarif d'une communication en évaluant la valeur de chaque paramètre et en identifiant dans la table de correspondance le tarif associé à l'ensemble des valeurs trouvées.

Par exemple, le module MCT détermine un tarif actuel "tarif2" associé à la valeur "audio" du paramètre "type de média", à la valeur "période creuse" du paramètre "type de période", et à la valeur "locale" du paramètre "type de zone". Le module MCT peut déterminer les paramètres qui sont associés au tarif actuel "tarif3" à l'instant t et dont la valeur est susceptible de changer entre l'instant t et l'instant t+T, T étant un délai donné, c'est-à-dire les paramètres "type de média", "type de période", et "type de zone", qui sont respectivement susceptibles de passer de la valeur "audio" à la valeur "vidéo", de la valeur "période creuse" à la valeur "période pleine", et de la valeur "locale" à la valeur "nationale".

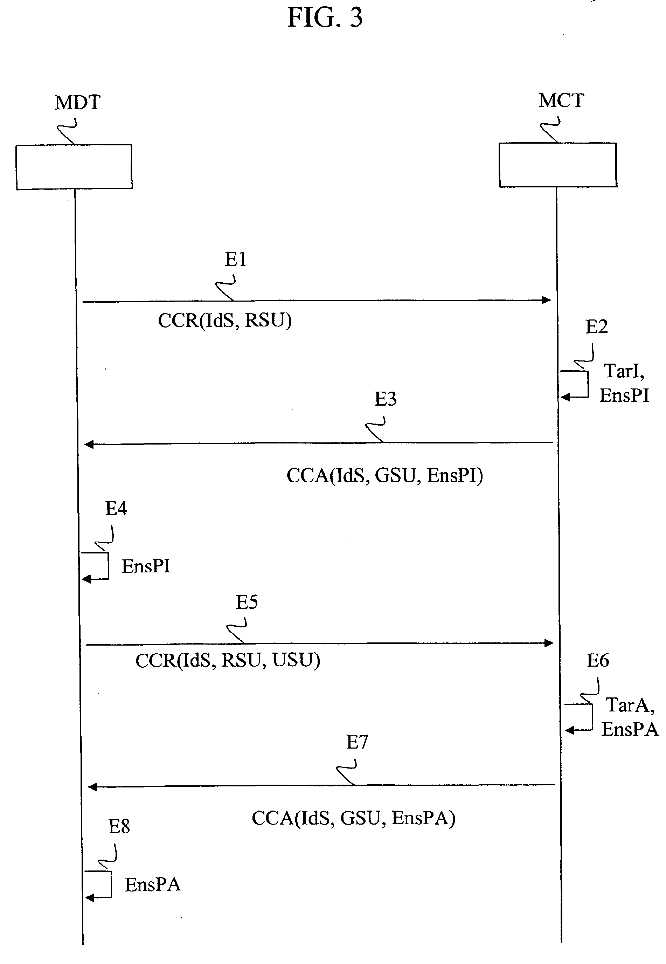

En référence à la figure 3, un procédé pour gérer un changement de tarif de communication selon une réalisation de l'invention comprend des étapes E1 à E10 exécutées dans le système de communication.

Le procédé est décrit ci-après en référence à un réseau de télécommunication RT connecté à un réseau IMS en tant qu'exemple.

A l'étape E1, le terminal TU établit une communication dans le réseau RT, par exemple avec un autre terminal. Le terminal transmet un message d'initiation de session de communication au module de déclenchement de taxation MDT. Ce message est par exemple de type "INVITE" et contient notamment un identificateur du type de communication demandée par l'utilisateur, qui correspond par exemple à un appel audio ou un appel vidéo. Le module de déclenchement de taxation MDT identifie le profil de l'utilisateur et le type de service relatif à la communication. Le module MDT transmet une requête CCR ("Credit Control Request" en anglais) au module de contrôle de taxation MCT pour demander une autorisation d'utilisation du service relatif à la communication établie par le terminal TU.

La requête CCR contient notamment un identificateur IdS du service et un nombre d'unités de service requises RSU ("Requested Service Unit" en anglais). Les unités de service peuvent correspondre à des unités monétaires ou téléphoniques.

A l'étape E2, le module de contrôle de taxation MCT détermine le tarif initial de la communication, en fonction d'un ensemble de valeurs de paramètres relatifs à la communication, ledit ensemble étant associé au tarif initial, les paramètres étant eux-mêmes déterminés en fonction du type de service au moyen de l'identificateur IdS. A cette fin, le module MCT peut déterminer le tarif d'une communication en évaluant la valeur de chaque paramètre et en identifiant dans une table de correspondance le tarif associé à l'ensemble de valeurs trouvées.

Dans un exemple, le module MCT parcourt un arbre de décision en analysant une succession de valeurs de paramètres relatifs à la communication jusqu'à aboutir à un noeud feuille indiquant le tarif initial. Cette succession de valeurs est considéré être un ensemble de valeurs de paramètres associé au tarif initial.

Le module de contrôle de taxation MCT identifie un ensemble de paramètres relatifs à la communication qui sont associés au tarif, c'est-à-dire qui ont été utilisés pour déterminer le tarif. Le module MCT identifie en outre un ensemble initial EnsPI de paramètres associés à des évènements susceptibles de modifier la tarification de la communication entre l'instant t et un instant t+T1, T1 étant un délai donné, par exemple déduit du nombre d'unités de service requises RSU. L'ensemble EnsPI des paramètres susceptibles de modifier la tarification de la communication est déduit de l'ensemble des paramètres relatifs à la communication qui sont associés au tarif, les deux ensembles étant généralement confondus. Ces paramètres sont associés à des évènements dont la survenance modifie la tarification de la communication, par exemple le paramètre "type de zone" est associé à un évènement qui le passage de la valeur "locale" à la valeur "nationale".

Par exemple, les paramètres sont "type de média", "type de période", et "type de zone". Dans une variante, tout paramètre relatif au temps, tel que le paramètre "type de période" n'est pas inclus dans l'ensemble EnsPI, puisque le module de déclenchement de taxation MDT peut surveiller de lui-même, sans commande externe,

A l'étape E3, le module de contrôle de taxation MCT produit une réponse CCA ("Credit Control Answer" en anglais) contenant des informations sur le tarif initial TarI, un nombre d'unités de service délivrées GSU ("Granted Service Unit" en anglais), et l'ensemble EnsPI des paramètres susceptibles de modifier la tarification de la communication.

Le nombre d'unités de service délivrées GSU correspond à un nombre maximal d'unités qui sont débitées au cours de la communication, et lorsque toutes les unités ont été débitées, le module de déclenchement de taxation MDT doit interroger automatiquement de nouveau le module de contrôle de taxation MCT pour faire une demande de nombre d'unités de service requises RSU.

Le module de contrôle de taxation MCT transmet la réponse CCA au module de déclenchement de taxation MDT.

A l'étape E4, le module de déclenchement de taxation MDT surveille seulement les évènements associés aux paramètres de la communication inclus dans l'ensemble EnsPI.

Par exemple, si l'ensemble EnsP contient les paramètres "type de média", "type de période", et "type de zone", le module MDT surveille seulement les évènements relatifs à ces paramètres, tels que les passages de la valeur "audio" à la valeur "vidéo", de la valeur "période creuse" à la valeur "période pleine", et de la valeur "locale" à la valeur "nationale", si les valeurs "audio", "période creuse", et "locale" sont initialement associés à ces paramètres.

A l'étape E5, lorsqu'un évènement associé à un paramètre de l'ensemble EnsP se produit, ou lorsque toutes les unités GSU ont été débitées, le module de déclenchement de taxation MDT transmet à nouveau une requête CCR au module de contrôle de taxation MCT. La requête CCR contient notamment l'identificateur IdS du service, un autre nombre d'unités de service requises RSU et un nombre d'unités de service utilisées USU ("Used Service Unit" en anglais). Si toutes les unités GSU ont été débitées, le nombre GSU est égal au nombre USU.

A titre d'exemple de référence, le module de déclenchement de taxation MDT détecte l'évènement relatif au passage du terminal mobile d'un type de zone "local" à un type de zone "national", à un instant t1, avant que toutes les unités GSU aient été débitées.

A l'étape E6, le module de contrôle de taxation MCT détermine le tarif actuel de la communication. Comme décrit précédemment, le module MCT peut déterminer le tarif actuel en fonction d'un ensemble de valeurs de paramètres relatifs à la communication, ledit ensemble étant associé au tarif actuel.

Le module de contrôle de taxation MCT identifie un ensemble de paramètres relatifs à la communication qui sont associés au tarif actuel, c'est-à-dire qui ont été utilisés pour déterminer le tarif actuel. Le module MCT identifie en outre un ensemble actuel EnsPA de paramètres susceptibles de modifier la tarification de la communication, selon l'exemple de référence entre l'instant t1 et un instant t1+T2, T2 étant un délai donné par exemple déduit du nombre d'unités de service requises RSU. De même, ces paramètres sont associés à des évènements dont la survenance modifie la tarification de la communication. L'ensemble actuel EnsPA peut être confondu avec l'ensemble initial EnsPI.

A l'étape E7, le module de contrôle de taxation MCT produit une réponse CCA ("Credit Control Answer" en anglais) contenant des informations sur le tarif actuel TarA, un nombre d'unités de service délivrées GSU ("Granted Service Unit" en anglais), et l'ensemble EnsPA des paramètres susceptibles de modifier la tarification de la communication.

Le module de contrôle de taxation MCT transmet la réponse CCA au module de déclenchement de taxation MDT.

A l'étape E8, le module de déclenchement de taxation MDT surveille seulement les évènements associés aux paramètres de la communication inclus dans l'ensemble EnsPA.

Les étapes E5 à E8 peuvent être répétées à chaque fois que le module de déclenchement de taxation MDT détecte l'épuisement du nombre d'unités délivrés GSU, ou détecte un évènement associé à un paramètre de l'ensemble EnsPA. En réponse à chaque requête CCR, le module de contrôle de taxation MCT détermine un tarif actuel et identifie dynamiquement un ensemble de paramètres relatifs à la communication qui sont associés au tarif et qui sont susceptibles de modifier la tarification de la communication entre un instant tx et un instant tx+Ty, tx étant l'instant auquel le module MDT détecte un évènement à surveiller et transmet une requête CCR au module MCT, Ty étant un délai donné par exemple déduit du nombre d'unités de service requises RSU contenu dans la requête CCR. En d'autres termes, l'ensemble de paramètres identifié contient des paramètres qui sont associés à des évènements susceptibles de modifier la tarification de la communication pendant un délai donné déduit du nombre d'unités de service requises RSU contenu dans la requête CCR à partir de l'instant auquel la requête CCR est reçue par le module MCT.

L'invention décrite ici concerne un procédé et un serveur pour gérer des changements de tarif d'une communication. Selon une implémentation de l'invention, les étapes du procédé de l'invention sont déterminées par les instructions d'un programme d'ordinateur incorporé dans un serveur. Le programme comporte des instructions de programme, qui lorsque ledit programme est chargé et exécuté dans le serveur, réalisent les étapes du procédé de l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou code intermédiaire entre code source et code objet tel que dans une forme partiellement compilée, ou dans n'importe quelle autre forme souhaitable pour implémenter le procédé selon l'invention.

## Revendications

1. Procédé pour la gestion d'un changement de tarif d'une communication établie par un terminal d'utilisateur (TU) dans un réseau de télécommunications (RT), comprenant les étapes suivantes dans un-serveur inclus dans le réseau de télécommunications :
après la réception d'une requête (CCR) issue d'un élément de réseau apte à générer des évènements de tarification en surveillant l'utilisation des ressources du réseau par la communication, ladite requête comprenant un identificateur (IdS) d'un service relatif à la communication et en outre un nombre d'unités de service requises (RSU), déterminer (E2) un tarif de la communication en fonction du service relatif à la communication et d'un ensemble de valeurs de paramètres relatifs à la communication,
identifier (E2) dynamiquement, parmi les paramètres ayant servi à déterminer le tarif, un ensemble (EnsPA) de paramètres qui sont associés à des évènements susceptibles de modifier la tarification de la communication pendant un délai donné déduit du nombre d'unités de service requises (RSU) contenu dans la requête (CCR) à partir de l'instant auquel la requête issue de l'élément de réseau est reçue par le serveur, et
transmettre (E3) une réponse (CCA), comprenant l'ensemble (EnsPA) des paramètres associés à des évènements susceptibles de modifier la tarification de la communication, à l'élément de réseau afin que ce dernier surveille seulement des évènements qui sont respectivement associés aux paramètres et dont la survenance modifie la tarification de la communication.

2. Procédé conforme à la revendication 1, selon lequel le serveur est inclus dans un système de tarification en ligne et l'élément de réseau est un serveur d'application.

3. Serveur pour la gestion d'un changement de tarif d'une communication établie par un terminal d'utilisateur (TU) dans un réseau de télécommunications (RT), comprenant :
des moyens (MCT) pour déterminer, après la réception d'une requête (CCR) issue d'un élément de réseau apte à générer des évènements de tarification en surveillant l'utilisation des ressources du réseau par la communication, ladite requête comprenant un identificateur (IdS) d'un service relatif à la communication et en outre un nombre d'unités de service requises (RSU), un tarif de la communication en fonction du service relatif à la communication et d'un ensemble de valeurs de paramètres relatifs à la communication,
des moyens (MCT) pour identifier dynamiquement, parmi les paramètres ayant servi à déterminer le tarif, un ensemble (EnsPA) de paramètres qui sont associés à des évènements susceptibles de modifier la tarification de la communication pendant un délai donné déduit du nombre d'unités de service requises (RSU) contenu dans la requête (CCR) à partir de l'instant auquel la requête issue de l'élément de réseau est reçue par le serveur, et
des moyens (MCT) pour transmettre une réponse (CCA), comprenant l'ensemble (EnsPA) des paramètres associés à des évènements susceptibles de modifier la tarification de la communication, à l'élément de réseau afin que ce dernier surveille seulement des évènements qui sont respectivement associés aux paramètres et dont la survenance modifie la tarification de la communication.

4. Programme d'ordinateur apte à être mis en oeuvre dans un serveur pour la gestion d'un changement de tarif d'une communication établie par un terminal d'utilisateur (TU) dans un réseau de télécommunications (RT), ledit programme comprenant des instructions qui, lorsque le programme est chargé et exécuté dans ledit serveur, réalisent les étapes suivantes :
après la réception d'une requête (CCR) issue d'un élément de réseau apte à générer des évènements de tarification en surveillant l'utilisation des ressources du réseau par la communication, ladite requête comprenant un identificateur (IdS) d'un service relatif à la communication et en outre un nombre d'unités de service requises (RSU), déterminer (E2) un tarif de la communication en fonction du service relatif à la communication et d'un ensemble de valeurs de paramètres relatifs à la communication,
identifier (E2) dynamiquement, parmi les paramètres ayant servi à déterminer le tarif, un ensemble (EnsPA) de paramètres qui sont associés à des évènements susceptibles de modifier la tarification de la communication pendant un délai donné déduit du nombre d'unités de service requises (RSU) contenu dans la requête (CCR) à partir de l'instant auquel la requête issue de l'élément de réseau est reçue par le serveur, et
transmettre (E3) une réponse (CCA), comprenant l'ensemble (EnsPA) des paramètres associés à des évènements susceptibles de modifier la tarification de la communication, à l'élément de réseau afin que ce dernier surveille seulement des évènements qui sont respectivement associés aux paramètres et dont la survenance modifie la tarification de la communication.

## Patentansprüche

1. Verfahren zur Verwaltung eines Gebührenbereichswechsels einer von einem Benutzerendgerät (TU) in einem Telekommunikationsnetzwerk (RT) aufgebauten Verbindung, wobei das Verfahren in einem in dem Telekommunikationsnetzwerk angeordneten Server die folgenden Schritte umfasst:
Bestimmen (E2), nach Empfang einer von einem Netzwerkelement, welches fähig ist, durch Überwachen der von der Verbindung genutzten Netzwerkressourcen Gebührenereignisse zu erzeugen, ausgegebenen Anforderung (CCR), wobei die besagte Anforderung eine Kennung (IdS) eines die Verbindung betreffenden Dienstes und weiterhin eine Anzahl von erforderlichen Diensteinheiten (RSU) enthält, eines Gebührentarifs für die Verbindung in Abhängigkeit von dem die Verbindungen betreffenden Dienst und von einem Satz von die Verbindung betreffenden Parameterwerten,
dynamisches Identifizieren (E2), unter den Parametern, die dazu gedient haben, den Gebührentarif zu bestimmen, eines Satzes (EnsPA) von Parametern, welche mit Ereignissen assoziiert sind, die möglicherweise die Tarifierung der Verbindung während einer gegebenen Dauer, welche von der Anzahl der in der Anforderung (CCR) enthaltenen erforderlichen Diensteinheiten (RSU) abgezogen wird, ab dem Zeitpunkt, zu welchem die von dem Netzwerkelement ausgegebene Anforderung am Server empfangen wird, verändern, und
Übertragen (E3) einer Antwort (CCA), welche den Satz (EnsPA) der mit Ereignissen, die möglicherweise die Tarifierung der Verbindung verändern, assoziierten Parameter enthält, an das Netzwerkelement, damit dieses Netzwerkelement lediglich diejenigen Ereignisse überwacht, die jeweils mit den Parametern assoziiert sind und deren Eintritt zu einer Veränderung des Gebührentarifs der Verbindung führt.

2. Verfahren nach Anspruch 1, wobei der Server in einem Online-Tarifierungssystem angeordnet ist und das Netzwerkelement ein Anwendungsserver ist.

3. Server zur Verwaltung eines Gebührenbereichswechsels einer von einem Benutzerendgerät (TU) in einem Telekommunikationsnetzwerk (RT) aufgebauten Verbindung, umfassend:
Mittel (MCT) zum Bestimmen, nach Empfang einer von einem Netzwerkelement, welches fähig ist, durch Überwachen der von der Verbindung genutzten Netzwerkressourcen Gebührenereignisse zu erzeugen, ausgegebenen Anforderung (CCR), wobei die besagte Anforderung eine Kennung (IdS) eines die Verbindung betreffenden Dienstes und weiterhin eine Anzahl von erforderlichen Diensteinheiten (RSU) enthält, eines Gebührentarifs für die Verbindung in Abhängigkeit von dem die Verbindungen betreffenden Dienst und von einem Satz von die Verbindung betreffenden Parameterwerten,
Mittel (MCT) zum dynamischen Identifizieren, unter den Parametern, die dazu gedient haben, den Gebührentarif zu bestimmen, eines Satzes (EnsPA) von Parametern, welche mit Ereignissen assoziiert sind, die möglicherweise die Tarifierung der Verbindung während einer gegebenen Dauer, welche von der Anzahl der in der Anforderung (CCR) enthaltenen erforderlichen Diensteinheiten (RSU) abgezogen wird, ab dem Zeitpunkt, zu welchem die von dem Netzwerkelement ausgegebene Anforderung am Server empfangen wird, verändern, und
Mittel (MCT) zum Übertragen einer Antwort (CCA), welche den Satz (EnsPA) der mit Ereignissen, die möglicherweise die Tarifierung der Verbindung verändern, assoziierten Parameter enthält, an das Netzwerkelement, damit dieses Netzwerkelement lediglich diejenigen Ereignisse überwacht, die jeweils mit den Parametern assoziiert sind und deren Eintritt zu einer Veränderung des Gebührentarifs der Verbindung führt.

4. Computerprogramm für den Einsatz in einem Server zur Verwaltung eines Gebührenbereichswechsels einer von einem Benutzerendgerät (TU) in einem Telekommunikationsnetzwerk (RT) aufgebauten Verbindung, wobei das besagte Programm Befehle umfasst, die, wenn das Programm in dem besagten Server geladen und ausgeführt wird, die folgenden Schritte durchführt:
Bestimmen (E2), nach Empfang einer von einem Netzwerkelement, welches fähig ist, durch Überwachen der von der Verbindung genutzten Netzwerkressourcen Gebührenereignisse zu erzeugen, ausgegebenen Anforderung (CCR), wobei die besagte Anforderung eine Kennung (IdS) eines die Verbindung betreffenden Dienstes und weiterhin eine Anzahl von erforderlichen Diensteinheiten (RSU) enthält, eines Gebührentarifs für die Verbindung in Abhängigkeit von dem die Verbindungen betreffenden Dienst und von einem Satz von die Verbindung betreffenden Parameterwerten,
dynamisches Identifizieren (E2), unter den Parametern, die dazu gedient haben, den Gebührentarif zu bestimmen, eines Satzes (EnsPA) von Parametern, welche mit Ereignissen assoziiert sind, die möglicherweise die Tarifierung der Verbindung während einer gegebenen Dauer, welche von der Anzahl der in der Anforderung (CCR) enthaltenen erforderlichen Diensteinheiten (RSU) abgezogen wird, ab dem Zeitpunkt, zu welchem die von dem Netzwerkelement ausgegebene Anforderung am Server empfangen wird, verändern, und
Übertragen (E3) einer Antwort (CCA), welche den Satz (EnsPA) der mit Ereignissen, die möglicherweise die Tarifierung der Verbindung verändern, assoziierten Parameter enthält, an das Netzwerkelement, damit dieses Netzwerkelement lediglich diejenigen Ereignisse überwacht, die jeweils mit den Parametern assoziiert sind und deren Eintritt zu einer Veränderung des Gebührentarifs der Verbindung führt.

## Claims

1. A method for managing a change in a price of a communication established by a user terminal (TU) within a telecommunications network (RT), comprising the following steps in a server included within the telecommunications network:
after receiving a request (CCR) from a network element capable of generating pricing events by monitoring the use of network resources by the communication, said request comprising an identifier (IdS) of a service related to the communication and additionally a number of requested service units (RSU), determining (E2) a price of the communication based on the service related to the communication and on a set of parameter values related to the communication,
dynamically identifying (E2), from among the parameters that were used to determine the price, a set (EnsPA) of parameters which are associated with events that may alter the pricing of the communication for a given period of time deduced from the number of requested service units (RSU) contained within the request (CCR) beginning from the moment when the request coming from the network element is received by the server, and
transmitting (E3) a response (CCA), comprising the set (EnsPA) of parameters associated with events that may alter the pricing of the communication, to the network element, so that that network element can monitor only events that are respectively associated with the parameters and whose occurrence alters the pricing of the communication.

2. A method according to claim 1, whereby the server is included within an online pricing system and the network element is an application server.

3. A server for managing a price change of a communication established by a user terminal (TU) within a telecommunications network (RT), comprising:
means (MCT) for determining, after receiving a request (CCR) from a network element capable of generating pricing events by monitoring the use of network resources by the communication, said request comprising an identifier (IdS) of a service related to the communication and additionally a number of requested service units (RSU), a price of the communication based on the service related to the communication and on a set of parameter values related to the communication,
means (MCT) for dynamically identifying (E2), from among the parameters that were used to determine the price, a set (EnsPA) of parameters which are associated with events that may alter the pricing of the communication for a given period of time deduced from the number of requested service units (RSU) contained within the request (CCR) beginning from the moment when the request coming from the network element is received by the server, and
means (MCT) for transmitting a response (CCA), comprising the set (EnsPA) of parameters associated with events that may alter the pricing of the communication, to the network element, so that that network element can monitor only events that are respectively associated with the parameters and whose occurrence alters the pricing of the communication.

4. A computer program capable of being implemented within a server for managing a change in a usage condition of a service associated with a communication established by a user terminal (TU) within a telecommunications network (RT), said program comprising instructions which, when the program is loaded and executed within said server, carry out the following steps:
after receiving a request (CCR) from a network element capable of generating pricing events by monitoring the use of network resources by the communication, said request comprising an identifier (IdS) of a service related to the communication and additionally a number of requested service units (RSU), determining (E2) a price of the communication based on the service related to the communication and on a set of parameter values related to the communication,
dynamically identifying (E2), from among the parameters that were used to determine the price, a set (EnsPA) of parameters which are associated with events that may alter the pricing of the communication for a given period of time deduced from the number of requested service units (RSU) contained within the request (CCR) beginning from the moment when the request coming from the network element is received by the server, and
transmitting (E3) a response (CCA), comprising the set (EnsPA) of parameters associated with events that may alter the pricing of the communication, to the network element, so that that network element can monitor only events that are respectively associated with the parameters and whose occurrence alters the pricing of the communication.
